# FASCICULE DE BREVET EUROPEEN

(11) **EP 1 934 062 B1**
(45) Date de publication et mention de la délivrance du brevet: **02.05.2012**
(21) Numéro de dépôt: 06806943.4
(22) Date de dépôt: 03.10.2006
(51) Int. Cl.: B60C 23/06

(54) **PROCÉDÉ ET DISPOSITIF DE MESURE DE PRESSION DE GONFLAGE D'UN PNEUMATIQUE AU MOYEN D'UN CAPTEUR DE CONTRAINTE**
VERFAHREN UND VORRICHTUNG ZUM MESSEN EINES REIFENAUFBLASDRUCKS MITTELS EINES SPANNUNGSSENSORS
METHOD AND DEVICE FOR MEASURING A TYRE INFLATION PRESSURE BY MEANS OF A STRESS SENSOR

(30) Priorité: 06.10.2005 FR 0510294
(43) Date de publication de la demande: 25.06.2008
(73) Titulaire: Société de Technologie Michelin, 63000 Clermont-Ferrand (FR); Michelin Recherche et Technique S.A., 1463 Granges-Paccot (CH)
(72) Inventeur: CUBIZOLLE, Bernard, F-63118 Cebazat (FR)
(74) Mandataire: Dequire, Philippe Jean-Marie Denis
(86) Numéro de dépôt international: PCT/EP2006/067001
(87) Numéro de publication internationale: WO 2007/039608

(56) Documents cités:
- EP-A- 0 937 615
- EP-A- 1 293 362
- FR-A- 2 771 965

## Description

La présente invention concerne un procédé de mesure de pression de gonflage d'un pneumatique de véhicule ainsi qu'un pneumatique comprenant un capteur.

L'invention concerne plus particulièrement la mesure de pression d'un pneumatique du type « tubeless » (c'est-à-dire sans chambre à air), comportant une masse de gomme, dite gomme intérieure, délimitée par une surface interne en contact avec l'air intérieur au pneumatique, et une surface externe en contact avec une nappe carcasse du pneumatique.

L'invention s'applique aussi au cas d'un pneumatique dit « tube type » destiné à être utilisé avec une chambre à air. Dans ce cas, la chambre à air joue le rôle de la gomme intérieure.

La mesure de la pression de gonflage d'un pneumatique à l'arrêt est connue de l'état de la technique, notamment au moyen d'un manomètre. L'invention concerne plus particulièrement les procédés permettant de mesurer la pression de gonflage d'un pneumatique au cours du roulage.

Un premier procédé connu consiste à mesurer des déformations du pneumatique, notamment au niveau de l'aire de contact avec le sol, pour en déduire la pression de gonflage. Ce procédé utilise le fait que la longueur de l'aire de contact varie en fonction de la pression du pneumatique et de la charge qu'il supporte.

En mesurant au cours d'un tour de roue les déformations subies par le pneumatique, on peut obtenir une estimation de la longueur de l'aire de contact. La longueur de l'aire de contact permet de déduire la flèche du pneumatique. La connaissance de la flèche et de la charge permet finalement d'obtenir une estimation de la pression de gonflage du pneumatique.

Du fait d'étapes intermédiaires de calcul comportant des approximations, la valeur de pression estimée par ce procédé n'est généralement pas très précise.
FR 2 771 965 , en accord avec les préambules respectifs des revendications 1 et 6, divulgue un pneumatique comportant un capteur sensible à l'accélération disposé sous la bande de roulement pour obtenir un signal relié à la longueur de l'aire de contact entre le pneumatique et le soL EP 1 293 362 divulgue un capteur de déformation noyé dans la bande de roulement d'un pneumatique. Ce capteur donne un signal utilisé en liaison avec des caractéristiques pré-déterminées pour mesurer la pression de gonflage du pneumatique.

Un second procédé connu de l'état de la technique consiste à intégrer sur le pneumatique ou sur la roue un capteur de pression apte à mesurer la pression régnant à l'intérieur du pneumatique.

Il se pose néanmoins le problème de la fixation du capteur de pression sur la roue ou sur le pneumatique. En effet, lors d'une rotation rapide du pneumatique, le capteur de pression est soumis à des forces très élevées qui fragilisent sa fixation. Il est donc nécessaire d'utiliser des moyens de fixation du capteur robustes, volumineux, lourds et coûteux.

En outre, on constate généralement la présence d'eau à l'intérieur du pneumatique. Le capteur de pression risque alors d'être en contact avec l'eau ce qui a pour effet d'accélérer sa corrosion.

L'invention a pour but de résoudre les problèmes d'incertitude de la mesure du premier procédé et les problèmes de fixation et de corrosion du capteur du second procédé.

A cet effet, l'invention a pour objet un procédé de mesure de pression de gonflage d'un pneumatique de véhicule, comportant une masse de gomme, dite gomme intérieure, délimitée par une surface interne en contact avec l'air intérieur au pneumatique, et une surface externe en contact avec une nappe carcasse du pneumatique, caractérisé en ce que l'on mesure une contrainte, dans la gomme intérieure du pneumatique, de compression entre les surfaces interne et externe de la gomme intérieure, et on déduit la pression de gonflage de cette contrainte.

Cette invention va à l'encontre du préjugé selon lequel les contraintes exercées à l'intérieur de la gomme d'un pneumatique résultent de l'effet cumulé de la pression, de la charge et de différents efforts de cisaillement apparaissant notamment lors de phases d'accélération ou de mise en dérive du pneumatique.

Les inventeurs ont en effet constaté que dans la gomme intérieure, la contrainte de compression entre les surfaces interne et externe de la gomme intérieure est sensiblement égale à la pression de gonflage du pneumatique. La contrainte de compression en un point de la gomme intérieure correspond à la contrainte qui s'exerce selon une direction sensiblement normale à la surface interne de la gomme intérieure. La direction normale est définie par la droite passant par le point où la contrainte est mesurée et par la projection orthogonale de ce point sur la surface interne de la gomme intérieure.

Grâce à ce procédé, la valeur de la pression de gonflage du pneumatique est obtenue par mesure directe d'une contrainte de compression, en limitant le plus possible les calculs qui comportent généralement des approximations.

Comme ce procédé permet la mesure d'une grandeur dans la gomme intérieure qui constitue une masse étanche, il est possible de placer un capteur dans cette masse étanche pour mesurer la contrainte. Le capteur ainsi placé est solidement fixé à la gomme intérieure et est à l'abri de l'eau qui est dans le pneumatique.

Un procédé de mesure selon l'invention peut en outre comporter l'une ou plusieurs des caractéristiques suivantes :
- on mesure la contrainte de compression de la gomme intérieure dans une partie de cette gomme recouverte par la bande de roulement ; les inventeurs ont constaté que la contrainte mesurée dans cette partie de la gomme constitue une très bonne estimation de la pression du pneumatique ;
- on mesure la contrainte de compression de la gomme intérieure au milieu de la largeur du pneumatique ;
- on mesure plusieurs fois la contrainte de compression au cours d'au moins un tour du pneumatique et on calcule une moyenne des valeurs de contrainte obtenues qui ne sont pas influencées par un contact du pneumatique avec le sol ; lors du passage dans l'aire de contact, les mesures de contrainte subissent des perturbations ; il est donc préférable d'estimer la pression du pneumatique en utilisant des mesures de contrainte qui ne sont pas influencées par un passage dans l'aire de contact.

Il est à noter que la gomme intérieure peut être une chambre à air de pneumatique lorsque le pneumatique est destiné à être utilisé avec une chambre à air.

L'invention a également pour objet un pneumatique de véhicule, comportant une masse de gomme, dite gomme intérieure, délimitée par une surface interne en contact avec l'air intérieur au pneumatique, et une surface externe en contact avec une nappe carcasse du pneumatique, le pneumatique comprenant un capteur, caractérisé en ce que le capteur comprend une surface d'application de contrainte qui est en contact avec la gomme intérieure de façon à être soumise à une contrainte de compression de la gomme intérieure entre ses surfaces interne et externe.

Un pneumatique de véhicule selon l'invention peut en outre comporter l'une ou plusieurs des caractéristiques suivantes :
- la surface d'application de contraintes est agencée dans une partie de la gomme intérieure recouverte par la bande de roulement ;
- la surface d'application de contraintes est agencée au milieu de la largeur du pneumatique ;
- la surface d'application de contraintes du capteur est noyée dans la gomme intérieure ; il est particulièrement avantageux de noyer le capteur dans la gomme intérieure en l'intégrant au pneumatique lors de son procédé de fabrication ; une fois que le capteur est noyé dans la gomme intérieure, sa fixation au pneumatique est particulièrement robuste ; de plus, le capteur ainsi noyé est à l'abri de l'eau qui stagne dans le pneumatique ;
- la surface d'application de contraintes du capteur est au contact de la surface externe de la gomme intérieure ; pour noyer le capteur dans la gomme intérieure, il suffit de l'intégrer au pneumatique lors de l'assemblage des différents composants, entre la bande de gomme mince constituant la gomme intérieure et la nappe carcasse, de telle manière que la surface d'application du capteur est au contact de la surface externe de la gomme intérieure ; lors de l'intégration du capteur, il est préférable de l'orienter de sorte qu'il permette de mesurer uniquement la contrainte de compression, c'est-à-dire de sorte que la surface d'application du capteur soit orthogonale à la contrainte de compression ;
- le capteur est un capteur de pression.

L'invention a aussi pour objet un ensemble pneumatique et chambre à air dans lequel la gomme intérieure est une chambre à air de pneumatique, le pneumatique étant destiné à être utilisé avec cette chambre à air.

L'invention sera mieux comprise à la lecture de la description qui va suivre donnée uniquement à titre d'exemple et faite en se référant aux dessins annexés dans lesquels :
- la figure 1 est un schéma selon une coupe axiale d'un ensemble monté d'une roue et d'un pneumatique selon l'invention ; et
- la figure 2 est un graphique représentant le signal fourni par un capteur noyé dans le pneumatique de la figure 1, au cours d'un tour du pneumatique.

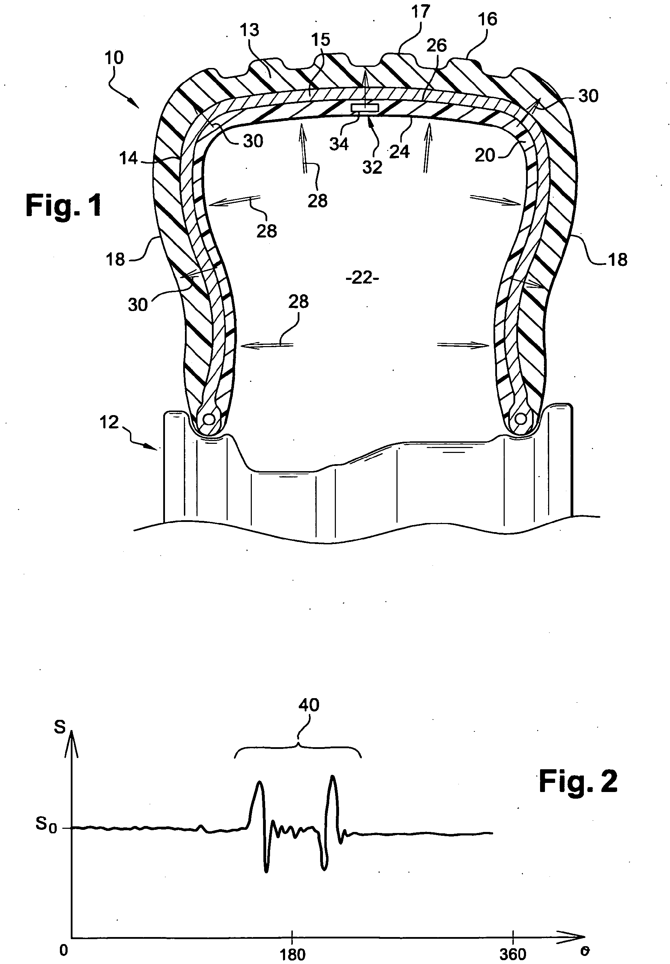

On a représenté sur la figure 1 un pneumatique, désigné par la référence générale 10, monté sur une roue 12.

Le pneumatique 10 comprend une première masse de gomme 13, dite gomme extérieure, comprenant une surface interne 14 en contact avec une nappe carcasse 15 et une surface externe 16 au contact de l'air extérieur au pneumatique. La surface externe 16 de la gomme extérieure 13 forme une bande de roulement 17 et deux flancs 18.

La nappe carcasse 15 sépare la première masse 13 de gomme d'une seconde masse de gomme, dite gomme intérieure 20. Le pneumatique 10 représenté sur la figure 1 étant un pneumatique de type Tubeless (c'est-à-dire sans chambre à air), la gomme intérieure 20 est imperméable à l'air et assure l'étanchéité du pneumatique 10.

La gomme intérieure 20 est délimitée par une surface interne 24 en contact avec l'air intérieur au pneumatique et une surface externe 26 en contact avec la nappe carcasse 15.

La surface interne 24 délimite une cavité 22 du pneumatique 10 à l'intérieur de laquelle est emprisonné l'air. La gomme intérieure 20 étant mince, les surfaces interne 24 et externe 26 sont sensiblement à distance constante l'une de l'autre.

Comme l'air emprisonné dans la cavité 22 est sous pression, il exerce sur la gomme intérieure 20 une force uniformément répartie sur sa surface interne 24. Cette force est symbolisée sur la figure 1 par des double-flèches 28, localement orthogonales à la surface interne 24.

La force exercée par la pression de l'air emprisonné dans la cavité 22 du pneumatique 10 a pour effet de comprimer la gomme intérieure 20 et de déplacer la surface interne 24 vers la surface externe 26, localement selon une direction normale à la surface interne 24. Ces déplacements ont pour effet de créer localement, dans la gomme intérieure 20, des contraintes dites « de compression » selon une direction normale aux surfaces interne 24 et externe 26. Ces contraintes sont symbolisées sur la figure 1 par des flèches simples 30.

Le pneumatique 10 comprend un capteur 32, qui dans l'exemple représenté est un capteur de pression 32, noyé dans la gomme intérieure 20.

Ce capteur de pression 32 comprend une surface 34 d'application de contraintes qui est en contact avec la gomme intérieure 20. Dans l'exemple représenté, la surface 34 d'application de contraintes est noyée dans la gomme intérieure mais cette surface pourrait être située entre la nappe carcasse 15 et la surface externe 26 de la gomme intérieure 20.

De plus, la surface 34 d'application de contraintes est disposée de façon à être soumise à une contrainte de compression de la gomme intérieure 20 entre ses surfaces interne 24 et externe 26. A cet effet, le capteur 32 est orienté de sorte que sa surface d'application 34 est orthogonale aux contraintes exercées dans la gomme intérieure 20, c'est-à-dire que la surface d'application 34 est parallèle à la surface interne 24.

De préférence, comme cela est représenté sur la figure 1, la surface 34 d'application de contraintes est agencée dans une partie de la gomme intérieure 20 recouverte par la bande de roulement 17, sensiblement au milieu de la largeur du pneumatique 10.

Les inventeurs ont constaté que la valeur de la contrainte mesurée par le capteur de pression 32 est sensiblement égale à la valeur de la pression régnant à l'intérieur de la cavité 22 du pneumatique 10. Ainsi, on peut considérer que la gomme intérieure transmet presque parfaitement les contraintes exercées sur sa surface interne 24 par la pression de l'air régnant dans la cavité 22.

Il est particulièrement important que le capteur soit orienté de manière à ne mesurer que la contrainte de compression qui n'est quasiment influencée que par la pression de l'air de la cavité. Une légère inclinaison du capteur par rapport à sa position optimale a pour effet que les valeurs de contrainte mesurées sont égales à la valeur de la pression dans le pneumatique à un biais près. En effet, si le capteur n'est pas correctement positionné, il risque d'être influencé par d'autres contraintes de la gomme intérieure 10, qui résultent par exemple du cisaillement du pneumatique.

Le procédé de mesure de pression de gonflage du pneumatique 10 selon l'invention consiste alors à mesurer une contrainte, en un point de la gomme intérieure 20 du pneumatique 10, de compression entre les surfaces interne 24 et externe 26 de la gomme intérieure, et à déduire la pression de gonflage de cette contrainte. La mesure de contrainte est obtenue au moyen du capteur de pression 32.

On a représenté sur la figure 2 l'évolution du signal fourni par le capteur de pression 32 au cours d'un tour d'un pneumatique roulant sur le sol. On distingue très nettement sur ce graphique une zone caractéristique 40. Cette zone caractéristique 40 correspond à un intervalle angulaire dans lequel le capteur de pression 32 est influencé par un contact du pneumatique avec le sol. Des mesures ont montré que cet intervalle angulaire est de l'ordre de 30 à 60 degrés en fonction des conditions de charge et de pression et notamment de la longueur de l'aire de contact.

En dehors de cet intervalle angulaire caractéristique 40, le signal mesuré en sortie du capteur de pression 32 est sensiblement constant et évolue autour d'une valeur sensiblement égale à la pression régnant dans le pneumatique. Par conséquent, il est avantageux de mesurer plusieurs fois la contrainte de compression au cours d'au moins un tour du pneumatique 10 et de calculer une moyenne des valeurs de contrainte obtenues qui ne sont pas influencées par un contact du pneumatique avec le sol. On obtient ainsi une valeur de la pression dans le pneumatique plus précise et plus fiable.

La plage angulaire caractéristique peut être utilisée pour estimer la longueur de l'aire de contact et en déduire la flèche du pneumatique ou la charge qu'il supporte. Ces calculs sont classiques et ont été décrits dans de nombreuses publications de l'état de la technique.

On notera enfin que l'invention n'est pas limitée au mode de réalisation précédemment décrit.

En particulier, on pourra utiliser tout autre type de capteur qu'un capteur de pression, qui permette de fournir une mesure d'une contrainte, dans la gomme intérieure du pneumatique, de compression entre les surfaces interne et externe de la gomme intérieure, notamment un capteur de contraintes.

## Revendications

1. Procédé de mesure de pression de gonflage d'un pneumatique (10) de véhicule, comportant une masse de gomme, dite gomme intérieure (20), délimitée par une surface interne (24) en contact avec l'air intérieur au pneumatique, et une surface externe (26) en contact avec une nappe carcasse (15) du pneumatique, **caractérisé en ce que** l'on mesure une contrainte, dans la gomme intérieure (20) du pneumatique (10), de compression entre les surfaces interne (24) et externe (26) de la gomme intérieure, et on déduit la pression de gonflage de cette contrainte.

2. Procédé selon la revendication 1, dans lequel on mesure la contrainte de compression de la gomme intérieure (20) dans une partie de cette gomme recouverte par la bande de roulement (17).

3. Procédé selon la revendication 2, dans lequel on mesure la contrainte de compression de la gomme intérieure (20) au milieu de la largeur du pneumatique (10).

4. Procédé selon l'une quelconque des revendications précédentes, dans lequel, le pneumatique (10) roulant sur le sol, on mesure plusieurs fois la contrainte de compression au cours d'au moins un tour du pneumatique (10) et on calcule une moyenne des valeurs de contrainte obtenues qui ne sont pas influencées par un contact du pneumatique avec le sol.

5. Procédé selon l'une quelconque des revendications précédentes, dans lequel ladite gomme intérieure (20) est une chambre à air de pneumatique lorsque ledit pneumatique est destiné à être utilisé avec ladite chambre à air.

6. Pneumatique (10) de véhicule, comportant une masse de gomme, dite gomme intérieure (20), délimitée par une surface interne (24) en contact avec l'air intérieur au pneumatique, et une surface externe (26) en contact avec une nappe carcasse (15) du pneumatique, le pneumatique comprenant un capteur (32), **caractérisé en ce que** le capteur (32) comprend une surface (34) d'application de contraintes qui est en contact avec la gomme intérieure (20) de façon à être soumise à une contrainte de compression de la gomme intérieure (20) entre ses surfaces interne (24) et externe (26).

7. Pneumatique (10) selon la revendication 6, dans lequel la surface (34) d'application de contraintes est agencée dans une partie de la gomme intérieure (20) recouverte par la bande de roulement (17).

8. Pneumatique selon la revendication 7, dans lequel la surface (34) d'application de contraintes est agencée au milieu de la largeur du pneumatique (10).

9. Pneumatique selon l'une quelconque des revendications 6 à 8, dans lequel la surface (34) d'application de contraintes du capteur est noyée dans la gomme intérieure (20).

10. Pneumatique selon l'une quelconque des revendications 6 à 8, dans lequel la surface (34) d'application de contraintes du capteur est au contact de la surface externe (26) de la gomme intérieure (20).

11. Pneumatique selon l'une quelconque des revendications 6 à 10, dans lequel le capteur (32) est un capteur de pression.

12. Ensemble pneumatique et chambre à air, le pneumatique étant selon l'une quelconque des revendications 6 à 11, dans lequel ladite gomme intérieure (20) est une chambre à air de pneumatique, ledit pneumatique étant destiné à être utilisé avec ladite chambre à air.

## Claims

1. Method for measuring inflation pressure of a vehicle tyre (10), comprising a rubber mass, termed interior rubber (20), delimited by an internal surface (24) in contact with the air inside the tyre, and an external surface (26) in contact with a carcass ply (15) of the tyre, **characterized in that** a compressive stress, in the interior rubber (20) of the tyre (10), between the internal (24) and external (26) surfaces of the interior rubber is measured, and the inflation pressure is deduced from this stress.

2. Method according to Claim 1, in which the compressive stress of the interior rubber (20) is measured in a part of this rubber overlapped by the tread (17).

3. Method according to Claim 2, in which the compressive stress of the interior rubber (20) is measured in the middle of the width of the tyre (10).

4. Method according to any one of the preceding claims, in which, the tyre (10) rolling on the ground, the compressive stress is measured several times in the course of at least one revolution of the tyre (10) and a mean is calculated of the stress values obtained which are not influenced by a contact of the tyre with the ground.

5. Method according to any one of the preceding claims, in which the said interior rubber (20) is a tyre inner tube when the said tyre is intended to be used with the said inner tube.

6. Vehicle tyre (10), comprising a rubber mass, termed interior rubber (20), delimited by an internal surface (24) in contact with the air inside the tyre, and an external surface (26) in contact with a carcass ply (15) of the tyre, the tyre comprising a sensor (32), **characterized in that** the sensor (32) comprises a stress application surface (34) which is in contact with the interior rubber (20) so as to be subjected to a compressive stress of the interior rubber (20) between its internal (24) and external (26) surfaces.

7. Tyre (10) according to Claim 6, in which the stress application surface (34) is arranged in a part of the interior rubber (20) overlapped by the tread (17).

8. Tyre according to Claim 7, in which the stress application surface (34) is arranged in the middle of the width of the tyre (10).

9. Tyre according to any one of Claims 6 to 8, in which the stress application surface (34) of the sensor is embedded in the interior rubber (20).

10. Tyre according to any one of Claims 6 to 8, in which the stress application surface (34) of the sensor is in contact with the external surface (26) of the interior rubber (20).

11. Tyre according to any one of Claims 6 to 10, in which the sensor (32) is a pressure sensor.

12. Tyre and inner tube assembly, the tyre being according to any one of Claims 6 to 11, in which the said interior rubber (20) is a tyre inner tube, the said tyre being intended to be used with the said inner tube.

## Patentansprüche

1. Verfahren zur Messung des Fülldrucks eines Luftreifens (10) eines Fahrzeugs, der eine Gummimasse, Innengummi (20) genannt, aufweiset, die von einer Innenfläche (24) in Kontakt mit der Luft innerhalb des Luftreifens und von einer Außenfläche (26) in Kontakt mit einer Karkassenlage (15) des Luftreifens begrenzt wird, **dadurch gekennzeichnet, dass** eine Druckspannung im Innengummi (20) des Luftreifens (10) zwischen der Innen- (24) und Außenfläche (26) des Innengummis gemessen und von dieser Spannung der Fülldruck abgeleitet wird.

2. Verfahren nach Anspruch 1, bei dem die Druckspannung des Innengummis (20) in einem Bereich dieses Gummis gemessen wird, der vom Laufstreifen (17) bedeckt ist.

3. Verfahren nach Anspruch 2, bei dem die Druckspannung des Innengummis (20) in der Mitte der Breite des Luftreifens (10) gemessen wird.

4. Verfahren nach einem der vorhergehenden Ansprüche, bei dem, wenn der Luftreifen (10) auf dem Boden rollt, die Druckspannung während mindestens einer Drehung des Luftreifens (10) mehrmals gemessen und ein Mittelwert der erhaltenen Spannungswerte berechnet wird, die nicht von einem Kontakt des Luftreifens mit dem Boden beeinflusst werden.

5. Verfahren nach einem der vorhergehenden Ansprüche, bei dem der Innengummi (20) eine Luftkammer des Luftreifens ist, wenn der Luftreifen dazu bestimmt ist, mit der Luftkammer genutzt zu werden.

6. Fahrzeug-Luftreifen (10), der eine Gummimasse, Innengummi (20) genannt, aufweiset, die von einer Innenfläche (24) in Kontakt mit der Luft innerhalb des Luftreifens und von einer Außenfläche (26) in Kontakt mit einer Karkassenlage (15) des Luftreifens begrenzt wird, wobei der Luftreifen einen Sensor (32) aufweist, **dadurch gekennzeichnet, dass** der Sensor (32) eine Fläche (34) zur Anwendung von Spannungen hat, die mit dem Innengummi (20) in Kontakt ist, um einer Druckspannung des Innengummis (20) zwischen seiner Innen- (24) und Außenfläche (26) ausgesetzt zu sein.

7. Luftreifen (10) nach Anspruch 6, bei dem die Fläche (34) zur Anwendung von Spannungen in einem Bereich des Innengummis (20) angeordnet ist, der vom Laufstreifen (17) bedeckt ist.

8. Luftreifen nach Anspruch 7, bei dem die Fläche (34) zur Anwendung von Spannungen in der Mitte der Breite des Luftreifens (10) angeordnet ist.

9. Luftreifen nach einem der Ansprüche 6 bis 8, bei dem die Fläche (34) des Sensors zur Anwendung von Spannungen in den Innengummi (20) eingebettet ist.

10. Luftreifen nach einem der Ansprüche 6 bis 8, bei dem die Fläche (34) des Sensors zur Anwendung von Spannungen mit der Außenfläche (26) des Innengummis (20) in Kontakt ist.

11. Luftreifen nach einem der Ansprüche 6 bis 10, bei dem der Sensor (32) ein Drucksensor ist.

12. Einheit aus Luftreifen und Luftkammer, wobei der Luftreifen nach einem der Ansprüche 6 bis 11 ist, wobei der Innengummi (20) eine Luftreifen-Luftkammer ist, wobei der Luftreifen dazu bestimmt ist, mit der Luftkammer verwendet zu werden.
